**Europäisches Patentamt**

**European Patent Office**

**Office européen des brevets**

(19)

(11) Veröffentlichungsnummer: **0 178 422**
**B1**

(12) **EUROPÄISCHE PATENTSCHRIFT**

(45) Veröffentlichungstag der Patentschrift:
27.12.89

(51) Int. Cl.⁴: **H 01 M 2/12**, H 01 M 2/04, H 01 M 10/46

(21) Anmeldenummer: **85110435.6**

(22) Anmeldetag: **20.08.85**

(54) **Bleiakkumulator.**

(30) Priorität: **15.10.84 DE 8430246 U**

(43) Veröffentlichungstag der Anmeldung:
**23.04.86 Patentblatt 86/17**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
DE-A-3 201 758
DE-U-8 007 719
US-A-4 289 836
US-A-4 306 002
US-A-4 348 466
US-A-4 444 853

PATENTS ABSTRACTS OF JAPAN, Band 8, Nr. 185
(E-262) 1622 , 24. August 1984; & JP - A - 59 75580
(HONDA GIKEN KOGYO K.K.) 28.04.1984

(73) Patentinhaber: **Accumulatorenwerke Hoppecke Carl Zoellner & Sohn GmbH & Co. KG, Bontkirchener Strasse 1 Postfach 1140, D-5790 Brilon 2 (DE)**

(72) Erfinder: **Cramer, Wilhelm, Am Heidfeld 1, D-5790 Brilon 3-Messinghausen (DE)**
Erfinder: **Schrewe, Manfred, Am Etzelsberg 32, D-5790 Brilon 1 (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

EP 0 178 422 B1

**Beschreibung**

Die Erfindung betrifft einen Bleiakkumulator, dessen Gehäuse durch einen Blockdeckel abgeschlossen ist, in welchem durch einen Unterdeckel und dazu im Abstand angeordneten Oberdeckel ein Hohlraum zur Säureabscheidung ausgebildet ist, der entsprechend der Zellenzahl in miteinander verbundene Kammern unterteilt ist, die jeweils über eine an ihrem tiefsten Punkt angeordnete Öffnung in Form eines Rohrstutzens an die zugehörige Zelle angeschlossen sind, wobei der Rohrstutzen aus zwei voneinander getrennten koaxial zueinander angeordneten Teilen besteht, die zwischen sich im Bereich der Kammer einen Gas- bzw. Säuredurchlaß freilassen, wobei der von dem Oberdeckel sich in die zugehörige Kammer hineinerstreckende Rohrstutzenteil einen größeren Durchmesser im Vergleich zu dem von dem Unterdeckel sich in die Zelle erstreckenden Rohrstutzenteil aufweist.

Ein solcher Bleiakkumulator ist aus der US-PS-4 606 022 bekannt. Bei ihm ist das Gehäuse durch einen aus Unterdeckel und Oberdeckel gebildeten Blockdeckel abgeschlossen. Der zwischen dem Unterdeckel und dem Oberdeckel ausgebildete Hohlraum dient der Säureabscheidung und ist zu diesem Zweck entsprechend der Zellenzahl des Bleiakkumulators in miteinander verbundene Kammern unterteilt. Der Blockdeckel weist zwei voneinander getrennte sowie koaxial zueinander angeordnete Rohrstutzen auf, wobei der eine Rohrstutzen an der Unterseite des Oberdeckels und der andere Rohrstutzen an der Unterseite des Unterdeckels derart angeformt ist, daß zwischen den Rohrstutzen im Bereich der Kammer ein Gas- bzw. Säuredurchlaß freigelassen ist. Der obere, am Oberdeckel angeformte Rohrstutzen weist dabei einen größeren Durchmesser als der am Unterdeckel angeformte Rohrstutzen auf. Eine Füll- und Kontrollöffnung ist im Oberdeckel nicht vorgesehen.

Ein anderer Bleiakkumulator mit integrierter Säureabscheidung ist aus dem deutschen Gebrauchsmuster 8007 719 bekannt. Bei ihm besitzt der Blockdeckel für jede Zelle eine verschließbare Öffnung, die so gestaltet ist, daß sie eine Kombination von Füll-, Kontroll- und Sicherheitsöffnungen bildet, die durch ihre rohrstutzenartige Ausbildung auch die Funktion der Entgasungs- und Rückflußöffnung für abgeschiedene Säure übernimmt. Dabei wird der aus jeder Zelle austretende Gasstrom mehrfach in der zugehörigen Kammer umgelenkt, so daß es zu einer Abscheidung des enthaltenen Säurenebels und einer Trocknung der Gase kommt. Die abgeschiedene Flüssigkeit fließt im Gegenstrom zu den austretenden Gasen in die Zelle zurück. Die derart getrocknete Gasmenge kann über die zwischen den einzelnen Kammern bestehenden Verbindungsöffnungen und eine Entlüftungsöffnung des Hohlraumes, insbesondere über ein Flammsieb-Ventil, entweichen.

Nachteilig ist bei dem bekannten Bleiakkumulator, daß im Rahmen der Fertigung zur Prüfung der Dichtigkeit der innenliegenden Zellenverbindungen sowie der Verbindung zwischen Unterdeckel und Blockkasten zwingend der Unterdeckel vor dem Oberdeckel auf den Blockkasten aufgeschweißt, verklebt oder anderweitig verbunden werden muß. Nur ohne Oberdeckel ist die Dichtigkeitsprüfung bei dem bekannten Bleiakkumulator im Rahmen der Fertigung der Batterie möglich. Hieraus ergibt sich nachteiligerweise, daß die Vorfertigung des aus Ober- und Unterdeckel bestehenden Blockdeckels als Kompletteil, der als solcher ebenfalls einer eigenen Dichtigkeitsprüfung unterziehbar ist, nicht möglich ist. Insbesondere besteht bei der bisherigen durch die Konstruktion des Blockdeckels aufgezwungenen Herstellungsweise keine Möglichkeit zu prüfen, ob die den Hohlraum bildenden Kammern zur Säureabscheidung dicht sind. Bei Bestehen einer Undichtigkeit funktioniert die Gasumlenkung, Gastrocknung bzw. Abscheidung des Säurenebels nicht mehr, da der vorgeschriebene Gasweg mit entsprechenden Umlenkungen von den austretenden Gasen gemieden wird und Kurzschlußströmungen auftreten können. Derartige Kurzschlußwege durch Undichtigkeiten stellen die Funktion insgesamt in Frage.

Nachteilig ist ferner, daß der bekannte Bleiakkumulator im Blockdeckel keine säuregeschützten Räume zur Unterbringung von Batterie-Überwaschungselementen und ähnlicer Einrichtungen aufweist.

Demgegenüber liegt der Erfindung die Aufgabe zugrunde, einen Blockdeckel zu schaffen, dessen Zusammenbau entweder direkt nach Erzeugung der Einzelkomponenten oder aber bei der Montage der Batterie in der Fertigungslinie erfolgen kann, wobei die Prüfung auf Dichtheit der verbundenen Teile sowohl einzeln wie auch in Verbindung mit dem Blockkasten der Batterie ermöglicht ist.

Die Aufgabe ist an einem Bleiakkumulator der eingangs beschriebenen Art erfindungsgemäß dadurch gelöst, daß der Oberdeckel im Bereich des sich in die zugehörige Kammer hineinerstreckenden Rohrstutzenteils eine durch einen Verschlußstopfen verschließbare Füll- und Kontrollöffnung aufweist. Damit besteht das wesen der Erfindung darin, den bisher durch die zugehörige Kammer durchgehenden Rohrstutzen in zwei Teile derart zu trennen, daß die erwünschte Variabilität bezüglich des Zusammenbaus des Blockdeckels erreicht wird und zusätzlich eine Prüfung auf Dichtigkeit der verbundenen Teile sowohl einzeln (Deckel komplett, jedoch nicht verbunden mit dem Blockkasten) wie auch in Verbindung mit dem Blockkasten der Batterie ermöglicht ist. Dabei kann der sich in die Zelle erstreckende Rohrstutzenteil auch auf die alleinige Öffnung im Unterdeckel reduziert sein.

Vorzugsweise ist der Gas- bzw. Säuredurchlaß ringförmig, jedoch können bei bestimmten Gegebenheiten Haltestege vorgesehen sein, die eine Abstützung am Unterboden zur Erhöhung der mechanischen Belastbarkeit im Stopfenbereich bereitstellen. Zur Erleichterung der Dichtigkeitsprüfung ist es darüber hinaus zweckmäßig, wenn der vom Unterdeckel sich in die Zelle erstreckende Rohrstutzenteil nicht in die Kammer hineinragt, sondern bündig mit dem Unterdeckel abschließt. Dieser kann im Bereich seiner Öffnung geneigt ausgebildet sein, um den Rückfluß von Säure einerseits und die Dichtigkeitsprüfung andererseits zu erleichtern. Der sich vom Unterdeckel in die Zelle erstreckende Rohrstutzenteil weist senkrecht verlaufende Schlitze als Verbindungsöffnungen auf, die Zellenraum und Kammer-Hohlraum für Gasabführung miteinander verbinden.

Um das ausströmende, mit Säurenebel angereicherte Gas mehrfach umzulenken, ist in zweckmäßiger Ausgestaltung der Erfindung vorgeschlagen, innerhalb der Kammer den vom Oberdeckel sich in diese hineinerstreckenden Rohrstutzenteil mit Abstand von einem Hohlzylinder zu umgeben, der vom Unterdeckel bis zum Oberdeckel reicht und derart einen Ringkanal bildet, welcher über einen oder mehrere Durchbrüche mit dem Kammer-Hohlraum in Verbindung steht. Der Hohlzylinder kann in zwei miteinander korrespondierende Teile geteilt sein, deren einer einstückig mit dem Oberdeckel und deren anderer einstückig mit dem Unterdeckel ausgebildet ist. Es ist vorteilhaft, die im Hohlzylinder vorgesehenen Durchbrüche versetzt zu den Schlitzen des Rohrstutzens anzuordnen. Eine Verbesserung der Gastrocknung wird vorteilhafterweise erreicht, indem in jeder Kammer labyrinthartig Rippen herausgebildet sind, die eine mehrfache Umlenkung des Gasstromes erzwingen.

Gemäß der bevorzugten Ausführungsform der Erfindung sind die Kammern unter Überdeckung der mittigen Füllöffnungen des Bleiakkumulators nebeneinander unter Bildung eines gegen überschwappende Säure geschützten Raumen in jeder Kammer angeordnet, in den jeweils ein Rekombinator zur katalytischen Rekombination der Wasserstoff- und Sauerstoffgase zu Wasser eingesetzt ist. Das vom Säurenebel weitgehend befreite Gas, welches ansonsten an die Atmosphäre, gegegenenfalls über ein Flammsieb-Ventil entweichen würde, wird bei dieser Ausführungsform der Erfindung durch katalytische Rekombination in Form von Wasser der jeweiligen Zelle wieder zugeführt. Hierdurch wird eine Wartungsfreiheit über die gesamte Lebensdauer der Batterie erreicht. Ferner ist in weiterer Ausgestaltung der Erfindung vorgeschlagen, in dem noch freien Bereich zwischen den beiden Endpolen des Bleiakkumulators separate, in sich abgeschlossene Kammern zwischen Ober- und Unterdeckel auszubilden, die für die Aufnahme von Sensoren zur Batteriezustandserkennung, wie auch für die Aufnahme von Steuer- und Regelelementen zur Batterielade- und Entladesteuerung vorgesehen sind. Notwendige elektrische und mechanische Anschlüsse sind gas- und elektrolytdicht nach außen abgeführt, so daß erstmals eine säuregeschützte Unterbringung von elektrischen und elektronischen Bauteilen in Batterie-Blockdeckeln ermöglicht ist. Als Bauteile können Lichtmaschinen-Regler mit Abgriff der Batteriespannung als Parameter sowie Sensoren für Ladezustand, Dichte, Füllstand, Innendruck, Temperatur und Gasung in den Zusatzkammern eingebaut sein, die über die Parametermessung und Auswertung dafür beispielsweise benutzt werden können, einen sicheren und sinnvollen Kraftfahrzeugbetrieb zu gewährleisten.

Bei dem erfindungsgemäß bevorzugten Bleiakkumulator werden der Unterdeckel, der Oberdeckel und der Batteriekasten separat aus thermoplastischem Kunststoff einstückig gespritzt, werden anschließend Oberdeckel und Unterdeckel zu einem vorgefertigten und auf Dichtigkeit geprüften Komplettteil miteinander verklebt oder verschweißt und wird sodann der Blockdeckel mit dem Batteriekasten durch Verkleben bzw. Verschweißen verbunden, wonach durch die Deckelöffnungen die Dichtigkeitsprüfung des Batterie-Innenraums vorgenommen werden kann. Schließlich können die Rohrstutzen der Öffnungen von außen durch einen Verschlußstopfen geeigneter Fassung verschlossen werden.

Die beschriebene Batterie der Erfindung vereinigt die Vorzüge eines offenen mit den Vorzügen eines geschlossenen Systems. Die Batterie kann 100 %-ig wartungsfrei sein und trotzdem servicefähig bleiben, damit bei leichten Defekten, z. B. im Regler einer Lichtmaschine, nicht gleich eine neue Batterie gebraucht wird. Die Batterie kann trocken geladen aufbewahrt werden. Im Betrieb wird durch den Doppeldeckel eine wirksame Gastrocknung erreicht, so daß der Austritt von Säurenebel vermieden ist. Motorraum und Elektrik eines Kraftfahrzeuges sind somit vor Korrosionen geschützt.

Weitere Einzelheiten, Merkmale und Vorteile des Gegenstandes der Erfindung ergeben sich aus der nachfolgenden Beschreibung der zugehörigen Zeichnung, in der Ausführungsformen von erfindungsgemäßen Blockdeckelausbildungen mit schematisch darunter angedeutetem Batteriekasten dargestellt sind. In der Zeichnung zeigt:

Fig. 1 einen Verschlußstopfen für eine kombinierte Füll- und Kontrollöffnung einer Zelle des Bleiakkumulators,

Fig. 2 ein Teilstück eines Oberdeckels einer Batterie, losgelöst vom Unterdeckel,

Fig. 3 ein Teilstück eines auf eine mehrzellige Batterie aufbringbaren, d.h. zu verschweißenden oder zu verklebenden Unterdeckels,

Fig. 4 einen Teil eines Bleiakkumulators im Längsschnitt, insbesondere durch die miteinander verschweißten Teile des Doppeldeckels und den Batteriekasten,

Fig. 5 einen Querschnitt durch einen Teil des Doppeldeckels mit Batteriekasten,

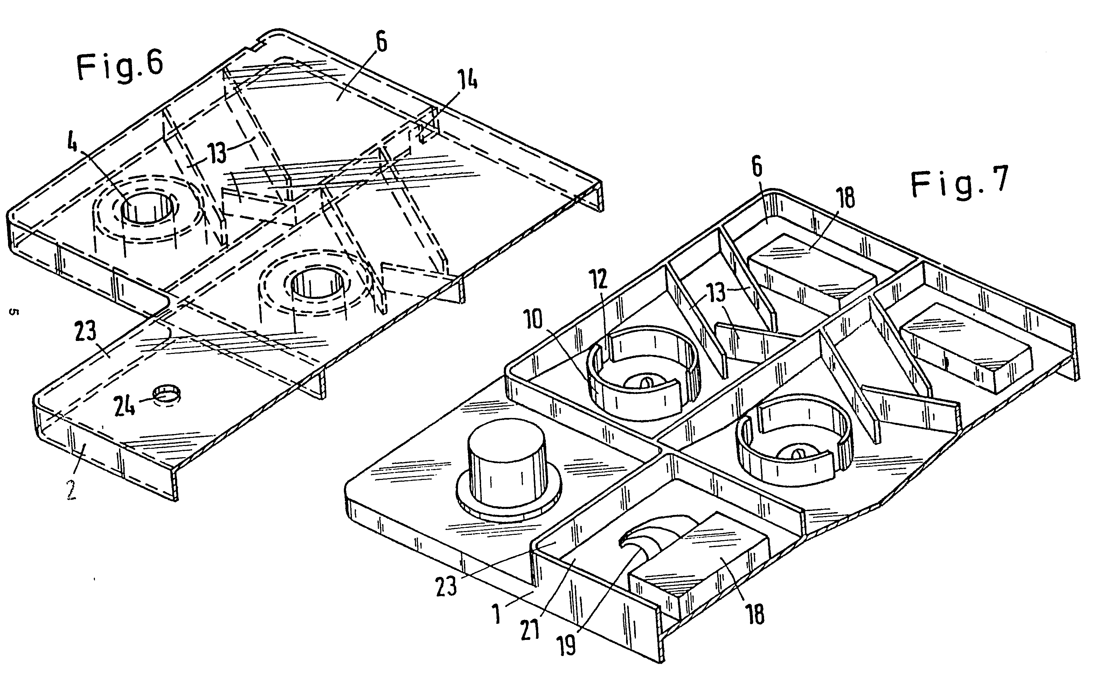

Fig. 6 ein Teilstück des Oberdeckels einer Batterie in Draufsicht und

Fig. 7 ein Teilstück des Unterdeckels einer Batterie mit Zusatzelementen.

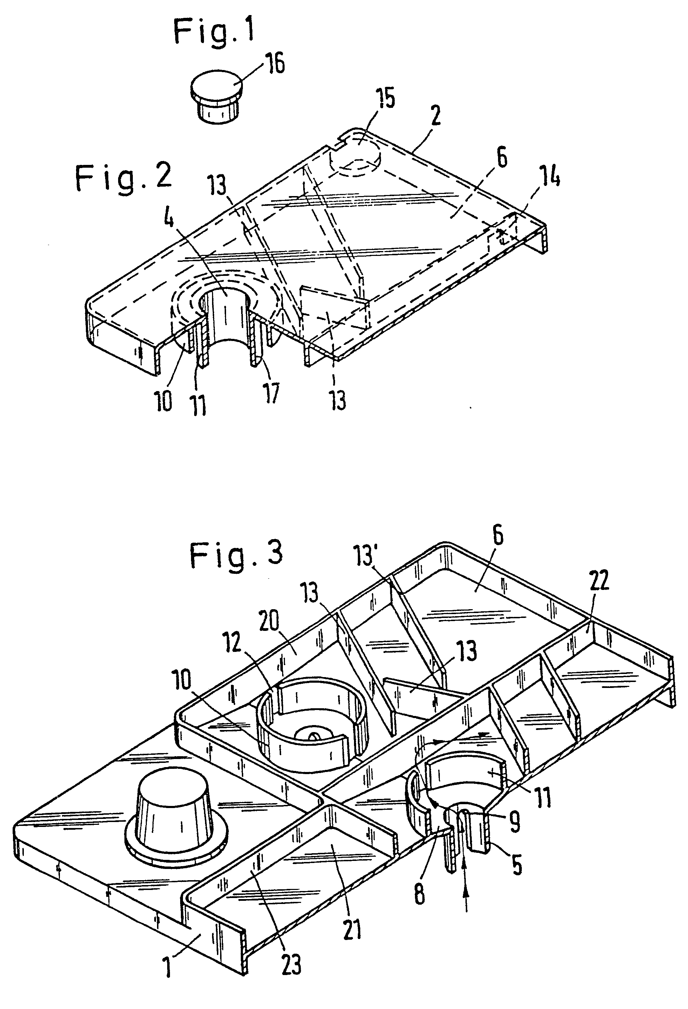

Die in der Zeichnung dargestellten Blockdeckelausbildungen und Batterieteile beziehen sich auf einen mehrzelligen Bleiakkumulator mit einem Batteriekasten und Deckel aus thermoplastischem Kunststoff, der mittige Befüllöffnungen entsprechend seiner Zellenzahl besitzt. Eine solche Starterbatterie hat in der Zeichnung nicht dargestellte innenliegende Zellenverbinder und zwei nahe an der Längsseite der Batterie durch einen Unterdeckel 1 hindurch geführte Zellenpole. Der Unterdeckel 1 besteht wie der Batteriekasten 3 aus thermoplastischem Kunststoff und ist mit diesem umlaufend dicht verschweißt, wie Figur 3 der Zeichnung entnehmbar ist.

Der Bleiakkumulator ist mit einer integrierten Säureabscheidung ausgerüstet. Zu diesem Zweck weist der Unterdeckel 1 in einstückiger Ausbildung hochstehende Wandleisten 20 auf, die nach Art eines Rahmens die Zellenöffnungen sowie den gesamten den Polen gegenüberliegenden Bereich der Batterie umfassen. Durch Unterteilungen 22 sind Kammern 6 ausgebildet, welche gemeinsam mit einem entsprechend ausgebildeten Oberdeckel 2 Hohlräume bilden, die zur Säreabscheidung geeignet sind. Diesem Zweck dienen schräg zueinander in jeder Kammer 6 vorgesehene Rippen 13, die eine Gasumlenkung erzwingen. Eine Mehrfachumlen kung wird durch zusätzliche Rippen 13' zur Verbesserung der Gastrocknung herbeigeführt. Wesentlich ist, daß durch die Schaffung der Kammer 6 sich das Gasausdehnungsvolumen erheblich erhöht. Auch die Kippsicherheit wird durch die Mehrfachverrippung 13, 13' weiter verbessert.

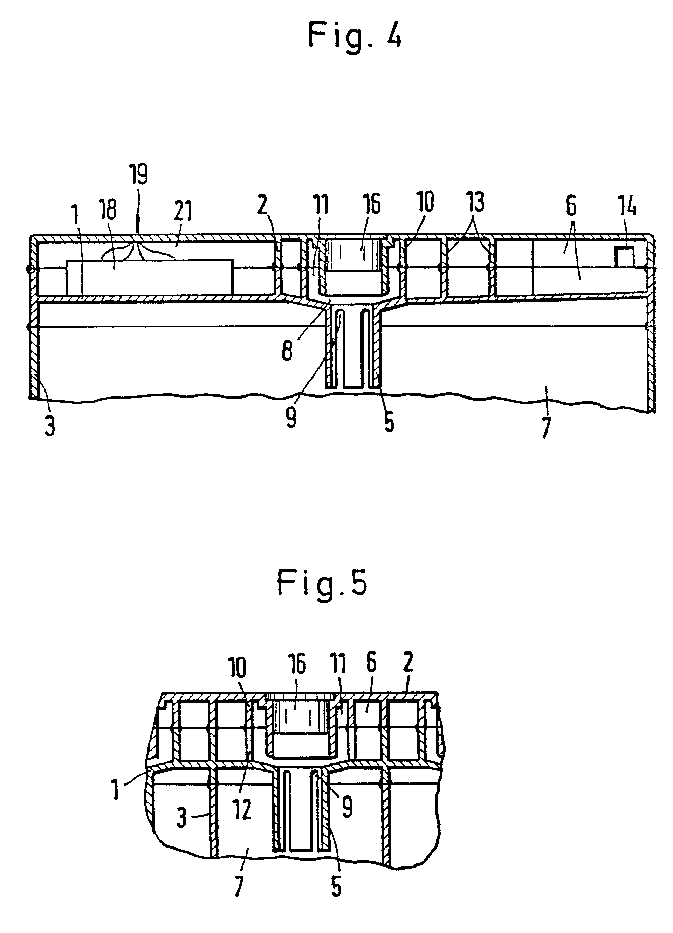

Figur 2 der Zeichnung ist entnehmbar, daß die beschriebene Ausbildung des Unterdeckels 1 korrespondiert mit der eines Oberdeckels 2, welcher ebenfalls aus thermoplastischem Kunststoff besteht und mit dem Unterdeckel verschweißt wird, wie beispielsweise in Figur 4 der Zeichnung verdeutlicht ist. Die dichte Verbindung der Blockdeckelteile miteinander - auch in Form eines vorgefertigten Kompletteils - und mit dem Batteriekasten kann auch durch Kleben vorgenommen sein.

Auf der Deckeloberseite (Figur 2) ist für jede Zelle eine durch einen Verschlußstopfen 16 verschließbare Füll- und Kontrollöffnung 4 freigelassen, welche in Form eines Rohrstutzens 17 in den Hohlraum der zugehörigen Kammer 6 geführt ist. Der Rohrstutzen 17 endet unter Belassung eines freien Ringraumes oberhalb des Unterdeckels 1, wie den Figuren 4 und 5 der Zeichnung gut entnehmbar ist. Von dort aus wird die Füll- und Kontrollöffnung 4 fortgesetzt durch einen Reduzierstutzen 5, der einstückig am Unterdeckel 1 ausgebildet ist und bis in die zugehörige Zelle 7 führt. Der Rohrstutzen 17 hat einen größeren Durchmesser als der Reduzierstutzen 5 derart, daß eine durch die Öffnung 4 eingeführte Prüfeinrichtung dicht am Boden des Unterdeckels 1 zur Anlage gebracht werden kann.

Das in die Zelle 7 hineinragende Ende des Reduzierstutzens 5 ist bis hinauf zum Kammerboden 8 mehrfach geschlitzt, wodurch Entgasungsöffnungen 9 gebildet sind. Der Kammerboden 8 ist mit einer entsprechenden Neigung zu der Öffnung hin versehen, wobei insbesondere in der Umgebung der Öffnung ein vergleichsweise stark geneigter Ringkonus ausgebildet ist. Dieser wird innerhalb der Kammer durch einen Hohlzylinder 10 bzw. einem Hohlzylinderausschnitt umgeben, welcher vom Kammerboden 8 bis unter den Oberdeckel 2 reicht und derart einen Ringkanal 11 bildet. Über dem Kammerboden 8 sind im Hohlzylinder 10 bzw. seitlich vom Hohlzylinderausschnitt zwei gegenüberliegend angeordnete Durchbrüche 12 vorgesehen. Sie sind zu den Entgasungsöffnungen 9 versetzt angeordnet, um die in Figur 3 der Zeichnung durch Pfeile verdeutlichte Gasumlenkung des ausströmenden, mit Säurenebel angereicherten Gases zu erzwingen. Dieses steigt aus dem Zellenraum durch den Reduzierstutzen 5 auf, gelangt durch den Ringspalt zwischen Boden und Rohrstutzen 17 in den Ringkanal 11, trifft gegen die Innenwände des Hohlzylinders 10, wird dort umgelenkt und gelangt durch die Durchbrüche 12 in die mit den Rippen 13, 13' ausgestattete Kammer 6. Die dort erzwungene Mehrfachumlenkung des Gasstromes bewirkt eine intensive Gastrocknung, so daß erst hieran anschließend der trockene Gasstrom zu der mit einem Flammsieb-Ventil 15 ausgestatteten Entlüftung des Deckels gelangt. Die einzelnen Kammern 6 stehen durch Verbindungsöffnungen 14 miteinander und mit der Entlüftung als Verbindung zur Atmosphäre in Verbindung.

Kondensierter und abgeschiedener Säurenebel fließt durch die versetzten Rippen 13, 13', den Hohlzylinder 10 bzw. den Kohlzylinderausschnitt und Reduzierstutzen 5 in die Batteriezellen zurück.

Grundsätzlich ist durch die Bereitstellung der Kammern 6 das Gasausdehnungsvolumen wesentlich erhöht. Ebenfalls wird die Kippsicherheit durch das Vorhandensein des Hohlzylinders 11 und die Rippen 13, 13' weiter erhöht. Da der beschriebene Blockdeckel in jeder Kammer 6 nur eine oder zwei Öffnungen für Entgasung und Rückfluß je Zelle benötigt, verbleibt durch die konstruktive Gestaltung der Rippen 13, 13' ein sowohl gegen überschwappende Säure als auch gegen Säurenebel geschützter Raum, der eine im wesentlichen trockene Gasatmosphäre aufweist. In diesem Raum können Zusatzelemente 18 untergebracht werden.

Für derartige Zusatzelemente 18 sind ferner im Bereich zwischen den beiden Batteriepolen Zusatzkammern, beispielsweise zwei nebeneinander angeordnete Zusatzkammern 21, ausgebildet, in dem einstückig auf dem Unterdeckel 1 und dem Oberdeckel 2 miteinander korrespondierende wandbildende Stege 23 ausgebildet sind, die sich nach dem Verschweißen miteinander zu Zusatzkammern 21 ergänzen. Die nötigen elektrischen und mechanischen Anschlüsse sind gas- und elektrolytdicht durch die Wandung und/oder den Deckel nach außen geführt. Als Zusatzelemente 18 können Sensoren, Regler, Geber und/oder Rekombinatoren eingebaut werden. Ihre Meß- und Versorgungsanschlüsse 19 werden im Ausführungsbeispiel durch eine Öffnung 24 staub- und feuchtigkeitsdicht, wie auch gas- und elektrolytdicht durch den Oberdeckel 2 nach außen geführt. Damit ist ein Blockdeckel für insbesonders wartungsfreie Starterbatterien bereitgestellt, der integrierte Elemente zur Batterieüberwachung und Steuerung erstmals aufweist. Falls als Zusatzelement 18 ein Rekombinator in den Kammern 6 jeweils eingesetzt wird, entfallen die Flammsieb-Ventile 15 und die Verbindungsöffnungen 14. Jeder Rekombinator besitzt eine Sicherheitsaustrittsöffnung, so daß das vom Säurenebel befreite Gas, welches sonst über die Flammsieb-Ventile 15 entweichen konnte, durch die Rekombination in Form von Wasser wieder in die jeweilige Zelle zurückgeführt wird.

Im Rahmen der Herstellung der Batterie werden zunächst Blockkasten, Unterdeckel und Oberdeckel getrennt im Spritzgießverfahren erstellt. Es findet sodann der Einbau von Zusatzelementen 18 und gegebenenfalls Flammsieb-Ventil statt, wonach der Unterdeckel 1 mit dem Oberdeckel 2 verklebt oder verschweißt wird. Im Anschluß daran erfolgt an den Deckel-Kompletteil die Dichtigkeitsprüfung der Elektronik-Zusatzkammern 21 und der Kammern 6 gegenüber der Umgebung. Hieran anschließend wird der vorgefertigte Blockdeckel mit dem Batteriekasten 3, in dem bereits die vollständige Zellenausbildung untergebracht ist, durch Kleben oder Schweißen dicht miteinander verbunden. Die anschließende Dichtigkeitsprüfung Blockdeckel gegenüber Zellen 7 erfolgt durch einführen eines Prüfstutzens durch die Füll- und Kontrollöffnung 4 des Oberdeckels 2 und Aufsetzen auf den Reduzierstutzen 5 des Unterdeckels 1.

**Bezugszeichenliste**

1 Unterdeckel
2 Oberdeckel
3 Batteriekasten
4 Füll- und Kontrollöffnung
5 Reduzierstutzen, Rohrstutzenteil
6 Kammer
7 Zelle
8 Kammerboden
9 Entgasungsöffnungen
10 Hohlzylinder
11 Ringkanal
12 Durchbrüche
13 Rippen
13'
14 Verbindungsöffnungen
15 Flammensieb-Ventil
16 Verschlußstopfen
17 Rohrstutzenteil
18 Zusatzelement
19 Mess- und Versorgungsanschlüsse
20 Wandleisten
21 Elektronikkammer
22 Unterteilung
23 Stege
24 Öffnungen

**Patentansprüche**

1. Bleiakkumulator, dessen Gehäuse durch einen Blockdeckel abgeschlossen ist, in welchem durch einen Unterdeckel (1) und dazu im Abstand angeordneten Oberdeckel (2) ein Hohlraum zur Säureabscheidung ausgebildet ist, der entsprechend der Zellenzahl in miteinander verbundene Kammern (6) unterteilt ist, die jeweils über eine an ihrem tiefsten Punkt angeordnete Öffnung in Form eines Rohrstutzens (5, 17) an die zugehörige Zelle (7) angeschlossen sind, wobei der Rohrstutzen (5, 17) aus zwei voneinander getrennten koaxial zueinander angeordneten Teilen besteht, die zwischen sich im Bereich der Kammer (6) einen Gas- bzw. Säuredurchlaß freilassen, wobei der von dem Oberdeckel (2) sich in die zugehörige Kammer (6) hineinerstreckende Rohrstutzenteil (17) einen größeren Durchmesser im Vergleich zu dem von dem Unterdeckel (1) sich in die Zelle (7) erstreckenden Rohrstutzenteil (5) aufweist, *dadurch gekennzeichnet* daß der Oberdeckel (2) im Bereich des sich in die zugehörige Kammer (6) hineinerstreckenden Rohrstutzenteils (17) eine durch einen Verschlußstopfen (16) verschließbare Füll- und Kontrollöffnung (4) aufweist.

2. Bleiakkumulator nach Anspruch 1, *dadurch gekennzeichnet,* daß der sich in die Zelle (7) erstreckende Rohrstutzenteil (5) auf eine alleinige Öffnung in Unterdeckel (1) reduziert ist.

3. Bleiakkumulator nach Anspruch 1 und 2, *dadurch gekennzeichnet,* daß der Gas- bzw. Säuredurchlaß ringförmig ist.

4. Bleiakkumulator nach einem der Ansprüche 1 bis 3, *dadurch gekennzeichnet,* daß der vom Unterdeckel (1) sich in die Zelle (7) erstreckende Rohrstutzenteil (5) bündig mit dem Unterdeckel (1) abschließt.

5. Bleiakkumulator nach einem der Ansprüche 1 bis 4, *dadurch gekennzeichnet,* daß der vom Unterdeckel (1) sich in die Zelle (7) erstreckende Rohrstutzenteil (5) senkrecht verlaufende Schlitze (9) als Entgasungsöffnungen aufweist.

6. Bleiakkumulator nach einem der Ansprüche 1 bis 5, *dadurch gekennzeichnet,* daß innerhalb der Kammer (6) ein Hohlzylinder (10) ausgebildet ist, der den vom Oberdeckel (2) sich in die Kammer (6) hineinerstreckenden Rohrstutzenteil (17) mit Abstand umgibt und derart einen Ringkanal (11) bildet, welcher über einen oder mehrere Durchbrüche (12) mit dem Kammer-Hohlraum in Verbindung steht.

7. Bleiakkumulator nach Anspruch 6, *dadurch gekennzeichnet,* daß die im Hohlzylinder (10) vorgesehenen Durchbrüche (12) versetzt zu den Schlitzen (9) im Rohrstutzenteil (5) angeordnet sind.

8. Bleiakkumulator nach einem der Ansprüche 1 bis 7, *dadurch gekennzeichnet*, daß die Kammern (6) unter Überdeckung der mittigen Füllöffnungen nebeneinander unter Bildung eines gegen überschwappende Säure geschützten Raumes in jeder Kammer (6) angeordnet sind, in dem jeweils ein Rekombinator zur katalytischen Rekombination der Wasser- und Sauerstoffgase zu Wasser eingesetzt ist.

9. Bleiakkumulator nach einem der Ansprüche 1 bis 8, *dadurch gekennzeichnet*, daß in dem freien Deckelbereich zwischen den beiden Endpolen separate, in sich abgeschlossene Kammern (21) zwischen Ober- und Unterdeckel ausgebildet sind, die für die Aufnahme von Sensoren (18) zur Batteriezustandserkennung, wie auch für die wahlweise Aufnahme von Steuer- und Regelelementen zur Batterielade- und Entladesteuerung vorgesehen sind.

10. Bleiakkumulator nach Anspruch 9, *gekennzeichnet durch* gas- und elektrolytdicht ausgebildete elektrische und mechanische Anschlüsse (20) in einer oder mehreren Wänden der Kammern (21).

**Claims**

1. A lead accumulator, the casing of which is sealed by a one-piece cover wherein a bottom cover (1) and a top cover (2) spaced apart from the latter form a cavity for the removal of acid, which cavity is subdivided into interconnected chambers (6) according to the number of cells, each of said chambers being linked to the associated cell (7) via an opening disposed at its lowest point in the form of a connecting sleeve (5, 17), the connecting sleeve (5, 17) comprising two parts, separate from one another and coaxial with one another, which between them leave a passage for gas or acid in the vicinity of the chamber (6), the connecting sleeve portion (17) that extends from the top cover (2) into the associated chamber (6) being greater in diameter compared to the connecting sleeve portion (5) that extends from the bottom cover (1) into the cell (7), *characterised in that* in the vicinity of the connecting sleeve part (17) that extends into the associated chamber (6), the top cover (2) has a filling and inspection opening (4) which can be closed by a vent plug (16).

2. The lead accumulator according to claim 1, *characterised* in that the connecting sleeve portion (5) that extends into the cell (7) is reduced to a single opening in the bottom cover (1).

3. The lead accumulator according to claims 1 and 2, *characterised* in that the passage for gas or acid is annular.

4. The lead accumulator according to one of claims 1 to 3, *characterised* in that the connecting sleeve portion (5) that extends from the bottom cover (1) into the cell (7) is flush with the bottom cover (1).

5. The lead accumulator according to one of claims 1 to 4, *characterised* in that the connecting sleeve portion (5) that extends from the bottom cover (1) into the cell (7) has vertically running slots (9) as degassing openings.

6. The lead accumulator according to one of claims 1 to 5, *characterised* in that inside the chamber (6) is formed a hollow cylinder (10) which encloses, with clearance, the connecting sleeve portion (17) that extends from the top cover (2) into the chamber (6) and in this manner constitutes a ring duct (11) which communicates with the chamber cavity via one or more cutouts (12).

7. The lead accumulator according to claim 6, *characterised* in that the cutouts (12) provided in the hollow cylinder (10) are offset in relation to the slots (9) in the connecting sleeve portion (5).

8. The lead accumulator according to one of claims 1 to 7, *characterised* in that the chambers (6) are disposed alongside one another to cover the central filling openings, forming in each chamber (6) a compartment which is protected from splashes of acid, a recombining unit being inserted in each such compartment for catalytic recombination of the water gases and oxygenic gases into water.

9. The lead accumulator according to one of claims 1 to 8, *characterised* in that in the free cover area between the two extreme poles there are arranged separate, self-contained chambers (21) between the top and bottom cover, said chambers being provided to receive sensors (18) for recognizing the condition of the battery, as well as to selectively receive control and regulating elements for controlling battery charging and discharging.

10. The lead accumulator according to claim 9, *characterised* by having in one or more walls of the chambers (21) electrical and mechanical connections (20) impervious to gas and electrolyte.

**Revendications**

1. Accumulateur au plomb dont le bac est fermé par un couvercle monobloc, dans lequel une cavité de séparation d'acide est formée par un couvercle inférieur (1) et un couvercle supérieur (2) disposé à distance du premier, cette cavité étant divisée, conformément au nombre des cellules, en chambres (6) reliées entre elles, chaque chambre étant raccordée à la cellule correspondante (7) par un orifice disposé au point le plus bas de la chambre et se présentant sous forme d'une tubulure (5, 17), cette tubulure (5, 17) se composant de deux éléments à disposition coaxiale séparés l'un de l'autre, ces éléments ménageant entre eux un passage de gaz et d'acide dans la zone de la chambre, l'élément de tubulure (17) qui s'étend dans la chambre correspondante (6) à partir du couvercle supérieur (2) présentant un plus grand diamètre par comparaison avec l'élément de tubulure (5) qui s'étend dans la cellule à partir du couvercle inférieur (1), *caractérisé* en ce que le couvercle supérieur (2) comporte, dans la zone de l'élément de tubulure (17) s'étendant dans la chambre correspondante (6), un orifice de remplissage et de contrôle (14) pouvant être fermé par un bouchon de fermeture (16).

2. Accumulateur au plomb selon la revendication 1, *caractérisé en ce* que l'élément de tubulure (5) s'étendant dans la cellule (7) est réduit à un seul orifice dans le couvercle inférieur (1).

3. Accumulateur au plomb selon les revendications 1 et 2, *caractérisé en ce* que le passage de gaz et d'acide est annulaire.

4. Accumulateur au plomb selon l'une des revendications 1 à 3, *caractérisé en ce* que l'élément de tubulure (5) s'étendant dans la cellule (7) à partir du couvercle inférieur (1) se termine au niveau du couvercle inférieur (1).

5. Accumulateur au plomb selon l'une des revendications 1 à 4, *caractérisé en ce* que l'élément de tubulure (5) s'étendant dans la cellule (7) à partir du couvercle inférieur (1) comporte des fentes (9) s'étendant verticalement en tant qu'ouvertures d'évacuation de gaz.

6. Accumulateur au plomb selon l'une des revendications 1 à 5, *caractérisé en ce* qu'un cylindre creux (10) est formé à l'intérieur de la chambre (6), ce cylindre entourant à distance l'élément de tubulure (17) qui s'étend dans la chambre (6) à partir du couvercle supérieur (2) et formant ainsi un conduit annulaire (11) qui est en communication par un ou plusieurs passages (12) avec la cavité de la chambre.

7. Accumulateur au plomb selon la revendication 6, *caractérisé en ce* que les passages (12) prévus dans le cylindre creux (10) sont disposés avec un décalage par rapport aux fentes (9) de l'élément de tubulure (5).

8. Accumulateur au plomb selon l'une des revendications 1 à 7, *caractérisé en ce* que les chambres (6) sont disposées l'une à côté de l'autre en prévoyant un recouvrement des orifices médians et en formant dans chaque chambre (6) un volume protégé contre l'acide qui déborde, un élément de recombinaison étant mis en place dans chaque chambre pour la recombinaison catalytique en eau de l'hydrogène et de l'oxygène gazeux.

9. Accumulateur au plomb selon l'une des revendications 1 à 8, *caractérisé en ce* que des chambres distinctes essentiellement fermées (21) sont formées entre le couvercle supérieur et le couvercle inférieur dans la zone de couvercle libre entre les deux pôles terminaux, ces chambres étant prévue pour le logement de détecteurs (18) pour détecter l'état de la batterie ainsi que pour le logement sélectif d'éléments de commande et de réglage pour commander la charge et la décharge de la batterie.

10. Accumulateur au plomb selon la revendication 9, *caractérisé* par des connexions électriques et mécaniques (20) de réalisation étanche aux gaz et à l'électrolyte dans une ou plusieurs parois des chambres (21).

Fig.1

16

Fig.2

15

2

13

6

14

4

13

10 11 17 13

Fig.3

13'

6

13

22

20

12

13

10

11

9

5

1

8

23

21

# Fig. 4

# Fig.5

Fig.6

Fig.7

EP 0 178 422 B1